# EUROPEAN PATENT SPECIFICATION

(11) **EP 3 914 881 B1**
(45) Date of publication and mention of the grant of the patent: **15.10.2025**
(21) Application number: 20701908.4
(22) Date of filing: 20.01.2020
(51) Int. Cl.: G01F 1/84

(54) **MICRO-CORIOLIS MASS FLOW SENSOR WITH STRAIN MEASUREMENT DEVICES**
MIKROCORIOLISMASSENSTROMSENSOR MIT DEHNUNGSMESSVORRICHTUNGEN
CAPTEUR DE DÉBIT MASSIQUE À MICROFORCE DE CORIOLIS AVEC DISPOSITIFS DE MESURE DE CONTRAINTE

(30) Priority: 21.01.2019 NL 2022423
(43) Date of publication of application: 01.12.2021
(73) Proprietor: Berkin B.V., 7261 AK Ruurlo (NL)
(72) Inventor: GROENESTEIJN, Jarno, 7261 AK RUURLO (NL); LÖTTERS, Joost Conrad, 7261 AK RUURLO (NL); SCHUT, Thomas Victor Paul, 7261 AK RUURLO (NL); WIEGERINK, Remco John, 7261 AK RUURLO (NL)
(74) Representative: Algemeen Octrooi- en Merkenbureau B.V.
(86) International application number: PCT/NL2020/050026
(87) International publication number: WO 2020/153835

(56) References cited:
- EP-A1- 3 417 250
- WO-A1-2017/142403
- JP-A- H07 311 064
- JP-A- S63 218 822
- US-A- 4 756 197
- US-A1- 2003 061 889
- SCHUT T V P ET AL: "Fully integrated mass flow, pressure, density and viscosity sensor for both liquids and gases", 2018 IEEE MICRO ELECTRO MECHANICAL SYSTEMS (MEMS), IEEE, 21 January 2018 (2018-01-21), pages 218 - 221, XP033335550, [retrieved on 20180424], DOI: 10.1109/MEMSYS.2018.8346523

## Description

### FIELD OF THE INVENTION

The present invention relates to a micro-Coriolis mass flow sensor.

### BACKGROUND OF THE INVENTION

Integrated micro-fluidic systems have generated interest in various fields such as medical and micro-chemical technology. Accurate flow measurement of small flows is a very important component in these technologies. Coriolis flow sensing is a preferred choice for flow measurement because of its ability to directly measure mass flow regardless of fluid properties.

A Coriolis flow sensor having a loop-shaped Coriolis tube is known from EP 1719982 A1. Various types of loop-shaped Coriolis tubes are described therein, both of the single loop type and of the (continuous) double loop type. The present invention relates to any of these types, but is not restricted thereto.

Another Coriolis flow sensor is known from US 2003/061889 A1.

A Coriolis flow sensor (also indicated as flow sensor of the Coriolis type) comprises at least one vibrating tube, often denoted Coriolis tube, flow tube, or sensing tube. This tube or these tubes is or are fastened at both ends to the housing of the instrument. These tube ends serve at the same time as feed and discharge ducts for the liquid or gas flow to be measured.

Besides the flow tube (or tubes), a Coriolis flow sensor normally comprises two further subsystems, i.e. one for excitation and one for detection. The excitation system (exciter) is arranged for bringing the tube into vibration. For this purpose, one or several forces or torques are applied to portions of the tube. The detection system is arranged for detecting at least a measure of the displacements of one or several points of the tube as a function of time.

As a fluid flows in the vibrating tube, it induces Coriolis forces, proportional to the mass flow, which affect the tube motion and change the mode shape. Measuring the tube displacement using the detection system, the amplitude of the secondary vibration can be detected relative to the actuation amplitude, which allows for mass-flow measurements.

The vibration of the tube generated by the exciter takes place at a more or less fixed frequency which varies slightly as a function, amongst others, of the density of the medium flowing through the tube. The vibration frequency is almost always a natural frequency of the tube so that a maximum amplitude can be achieved with a minimum energy input.

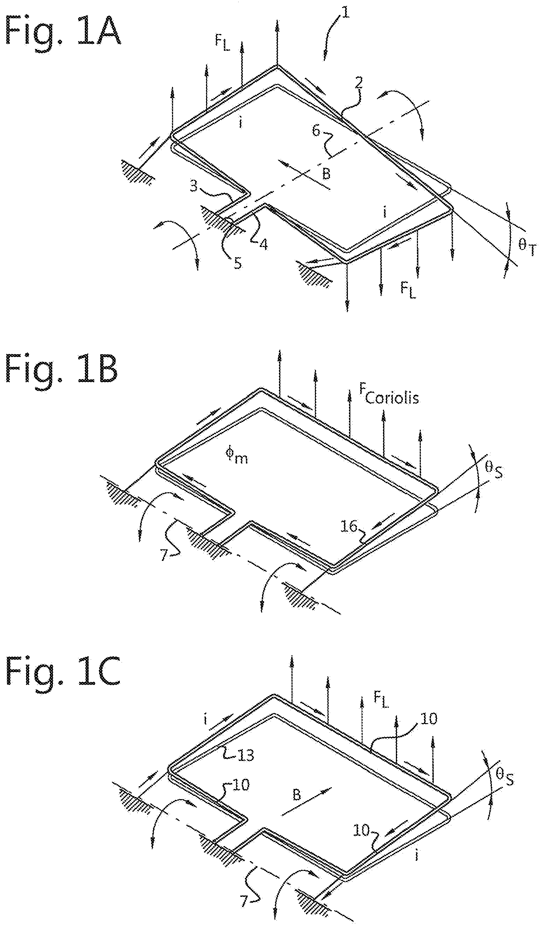

A micro-Coriolis mass flow sensor measures true mass flow, independent of fluid properties. Figures 1a - 1d show the operating principle of a micro-Coriolis mass flow sensor, based on a vibrating channel. The ratio between the vibration amplitudes of the two modes described in figures 1a - 1d is a measure for the mass flow through the channel. Increasing the actuation amplitude, increases the Coriolis forces, which leads to higher accuracy due to the improved signal to noise ratio.

However, a problem with the present micro-Coriolis mass flow sensors is that the skilled person's range of options regarding Coriolis tube geometry generally are very limited.

Another problem with the present micro-Coriolis mass flow sensors is that they are sensitive to the presence of water hammer.

### OBJECT OF THE INVENTION

An object of the invention is therefore to provide a micro-Coriolis mass flow sensor, wherein the skilled person is enabled to design the Coriolis tube with a much wider range of geometries.

Another object of the invention is furthermore to provide a micro-Coriolis mass flow sensor which is less sensitive to water hammer.

### DESCRIPTION OF THE INVENTION

Hereto, the Coriolis mass flow sensor according to the invention is characterized by the Coriolis tube having a substantially rectangular or square loop shape, the detection means comprising one or more strain measurement devices configured for resistive readout being arranged in or on the Coriolis tube, wherein a strain measurement device is located on a straight portion of the substantially rectangular or square loop shape of the Coriolis tube.

Thus, the skilled person is enabled to design the Coriolis tube with a much wider range of geometries compared to Coriolis mass flow sensors with capacitive readout, no longer being limited to for instance U-shaped Coriolis tubes.

Furthermore, by measuring strain instead of displacement, the micro-Coriolis mass flow sensor according to the invention is less sensitive to water hammer.

For sake of completeness, US 2016/0202101 A discloses the use of strain gauges or piezo-resistive elements as a readout method. However, the strain gauges are merely disclosed in combination with a pressure sensor, wherein the strain gauges are arranged on a diaphragm of a pressure sensor.

CN 1587916 A1 discloses a system for measuring flow on a micro-scale. However, the sensing element is not a tube, but a rigid element that is oriented perpendicular to the flow direction.

EP 1426741 A1 furthermore discloses resistive strain gauges, but does not disclose resistive strain gauges on the micro scale.

JPS 63218822 moreover discloses the mounting of strain gauges directly on a sensor tube in a non-micro-scale system.

US 4756197 A furthermore discloses a Coriolis-type mass flow meter. The respective Coriolis-type mass flow meter disclosed by US 4756197 A, however, has a circular loop.

US 4381680 A furthermore discloses a mass flow meter and more particularly a mass flow measuring device in the form of a "U-shaped" conduit through which a fluid material flows and which is subjected to oscillation for producing a Coriolis force proportional to the mass flow and arranged to measure a torsional moment caused in the U-shaped conduit due to the Coriolis force. By mounting strain gauges on a torque beam bridged between legs of the U-shaped conduit, the torsional moment thereof can be detected as an electric signal with high sensitivity. Furthermore, temperature and small signal characteristics are greatly improved, since the strain gauges are not directly influenced by temperature and vibration of the fluid. Thus, the mass flow meter allows for good measurement of a single flow or pulse flows of gas, liquid, slurries or the like with a linear relation between the mass flow and output under a wide rangeability, high sensitivity and excellent S/N ratio. Especially when the bridge circuit is formed by the strain gauges, noise components due to temperature deviation in fluid and atmosphere, oscillation of the U-shaped conduit and input voltage are compensated and a high reliability of the measurement is attained.

However, in contrast with the present disclosure, a problem with the Coriolis mass flow meter of US 4381680 A is that the strain gauges are fixed to the bridge in between the U-shaped Coriolis tube, thus only allowing measuring bending with respect to the "outside world", i.e. "swing mode". Thus, only U-type Coriolis tubes can be successfully used by this type of Coriolis mass flow meter (wherein the skilled person is again confronted with a relatively limited range of design options regarding the geometry of the Coriolis tube).

The present disclosure, by contrast, allows a micro-Coriolis mass flow sensor using both "swing mode" as well as "twist mode" actuation to be successfully employed, while maintaining the benefits of having the resistive readout.

For sake of completeness, for a capacitive readout the allowable actuation displacement is limited by the inherent non-linearity in capacitance. This issue is also conveniently solved by the resistive readout employed by micro-Coriolis mass flow sensor according to the present disclosure.

Furthermore, in contrast with capacitive measurement, the present disclosure prevents sensitivity and non-linearity of a capacitive readout being influenced by static displacements due to temperature and residual stress and by changes in relative permittivity of the fluid flowing through the sensor tube.

The one or more strain measurement devices measure strain instead of displacement, causing the measurement to be less susceptible to the disturbances described above. The one or more strain measurement devices may be linear strain measurement devices and therefore do not pose a limit to the vibration amplitude of the sensor tube.

As a general remark, it should be noted that using strain measurement devices, such as strain gauges, is not straightforward nor obvious, because the deformation of the sensor tube is extremely small and, therefore, also the changes in resistance are extremely small.

It should also be noted that other readout methods (optical, inductive, piezoelectric) could also be considered, but these all have the disadvantage that changes in the sensor design and the sensor fabrication are required, which again limits the skilled person's options regarding the geometry of the Coriolis tube. A resistive readout can be included without any change to the fabrication process.

In the context of the present patent application, "micro", as used in for instance "micro-Coriolis", generally relates to sensors being produced by means of MEMS ("Micro-Electro-Mechanical Systems") technology. By means of example, EP 3417250 A1 discloses a micro-Coriolis mass flow sensor with internal volumes in the order of 10-20 nl and a small footprint. The present invention intends to cover such a sensor. MEMS sensors, such as the micro-Coriolis mass flow sensor as disclosed in the present patent application, could be produced by methods common in semiconductor technology, such as disclosed in US 2018/348033 A1. The present invention for instance also intends to cover micromachined fluidic devices such as disclosed in US 2003/061889 A1, EP3417250 A1 and Schut T V P et al: "Fully integrated mass flow, pressure, density and viscosity sensor for both liquids and gases", 2018 IEEE MICRO ELECTRO MECHANICAL SYSTEMS (MEMS), IEEE, 21 January 2018, pages 218-221, DOI: 10.1109/MEMSYS.2018.8346523.

An embodiment relates to an aforementioned MEMS-Coriolis mass flow sensor, wherein the one or more strain measurement devices are arranged in or on one or more freely suspended portions of the Coriolis tube for locally measuring strain of the Coriolis tube. By not measuring strain in a fixed position ("anchor point"), such as at or on the hinge point around which the Coriolis tube is arranged to be displaced, but in or on a freely suspended portion of the Coriolis tube, relative strains can be measured in differential mode with a pair of strain measurement devices, such as two resistive elements or resistive strain gauges, for instance piezo-resistive elements or piezo-resistive strain gauges and other piezo-electric materials.

Preferably, the one or more strain measurement devices comprise one or more strain gauges, having an axial length of for instance 200 - 1000 µm, such as 200 - 400 µm. The width of the strain gauges may advantageously amount to for instance 2 - 20 µm, such as 4 - 5 µm, to make optimal use of the relatively limited available space. Smaller widths are also conceivable, but the fabrication process could become a limiting factor.

For optimal measurement results the one or more strain measurement devices are arranged to locally coincide with an axial direction of the Coriolis tube. Alternatively, the one or more strain measurement devices can be arranged at an angle of 30 - 60°, for instance 40 - 50°, such as 45° with respect to the excitation axis for the measurement of torsion.

Furthermore, the one or more strain measurement devices are preferably arranged at a distance from the tube fixation means to further facilitate measurement of relative strains in differential mode, although in some situations it is conceivable to arrange the one or more strain measurement devices close to the tube fixation means due to the strain being the largest there.

An embodiment relates to an aforementioned MEMS-Coriolis mass flow sensor, wherein, in rest, in the Coriolis tube is arranged in a tube plane and has a mirror plane, perpendicular to the tube plane, with the fixed inlet and outlet being symmetrically arranged with respect to the mirror plane, wherein a pair of strain measurement devices is symmetrically arranged with respect to the mirror plane to advantageously allow for differential measurements. The tube can have various cross-sections, preferably square or rectangular.

Furthermore, the rectangular or square loop shape of the Coriolis tube have perpendicular tube portions extending perpendicular to the mirror plane wherein the pair of strain measurement devices is arranged in or on the perpendicular tube portions. Thus, when in twist mode, one strain measurement device will be elongated and the other will be compressed, resulting in an opposite change of resistance. A combination of the two modes then gives two resistance signals with a phase shift dependent on the mass flow rate.

The rectangular or square loop shape of the Coriolis tube may furthermore have parallel tube portions extending parallel to the mirror plane, wherein the pair of strain measurement devices is arranged in or on the parallel tube portions.

Regarding the above, it should furthermore be noted that US 2003/061889 A1 does not disclose a rectangular Coriolis tube (leading to the abovementioned advantages), but a Coriolis tube with a U-shape with sharp edges or corners.

It should also be noted that US 4756197 A moreover does not disclose a pipe or tube having straight portions.

More generally speaking, US 4756197 A discloses a device with a circular pipe through which fluid is to flow. The skilled person in the field of flow meters understands that pipes must have a (near) circular cross-section, whereas the tube of the Coriolis device according to the present disclosure may have other cross-sections besides circular, for example rectangular or square.

Furthermore, it should be observed that US 4756197 A does not relate to a MEMS device. Instead US 4756197 A discloses a conventional strain measurement device, showing vastly different behavior and sensitivity compared to the strain measurement device disclosed in the present patent application.

### BRIEF DESCRIPTION OF THE DRAWINGS

The present invention will be explained hereafter showing the operation of the micro-Coriolis mass flow sensor according to the present disclosure and with reference to the drawings. Therein:
Figures 1a - 1d show the operation principle of a micro-Coriolis mass flow sensor according to the present disclosure;
Figure 2 shows a SEM image of a sensor chip comprising a micro-Coriolis mass flow sensor according to the present disclosure, wherein the inset shows a close-up of one of the resistive strain gauges;
Figures 3a - 3d show the principle of operation of the resistive readout of a micro-Coriolis mass flow sensor according to the present disclosure;
Figure 4 shows the output of the resistive readout in relation to the applied flow; and
Figure 5 shows a representation of the electronic readout circuit.

### DETAILED DESCRIPTION

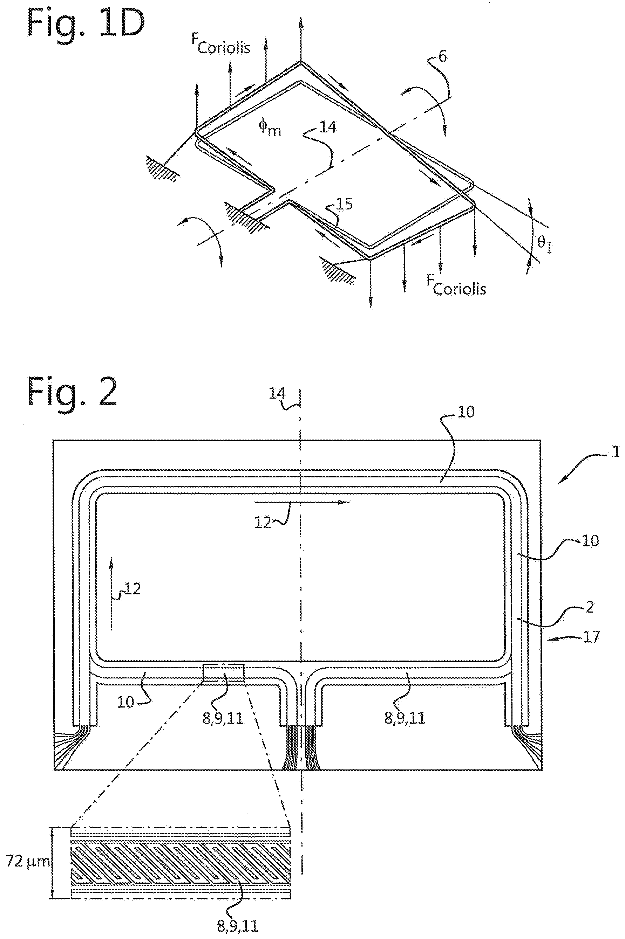

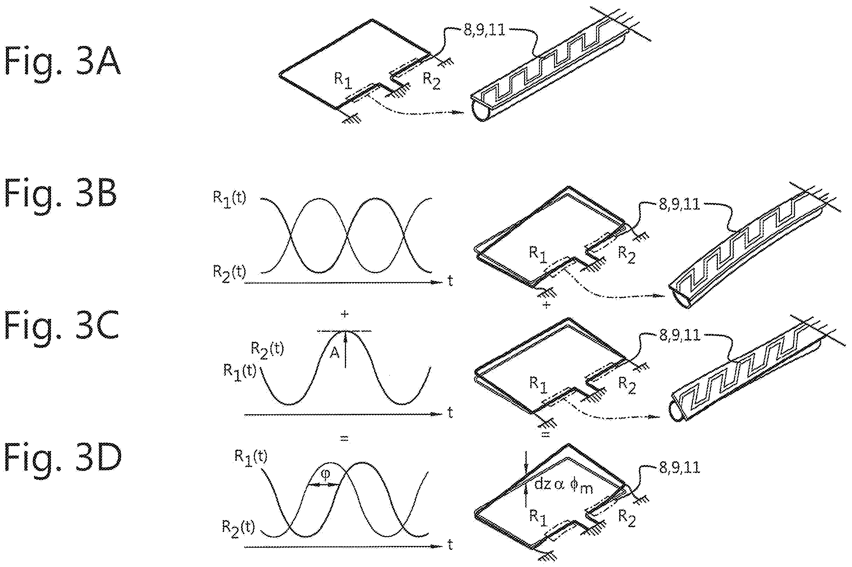

Figures 1-5 will be discussed in conjunction. Figures 1a - 1d schematically show an exemplary embodiment of a micro-Coriolis mass flow sensor 1, comprising a Coriolis tube 2 with a channel loop having a substantially rectangular shape, i.e. a shape with edges or corners connected by straight tubes, wherein the edges or corners are preferably slightly rounded (see e.g. Figure 2). The Coriolis tube 2 has a fixed inlet 3 and a fixed outlet 4, being fixed in tube fixation means 5. Excitation means (not shown) are provided for oscillating the Coriolis tube 2 about an excitation axis 7 in swing mode, as shown in figures 1b and 1c, or around an excitation axis 6 in twist mode, as shown in figures 1a and 1d. As shown in figures 2 and 3, detection means 8 are provided for detecting, in use, at least a measure for movements of part of the Coriolis tube 2. The detection means 8 comprise one or more strain measurement devices 9 configured for resistive readout being arranged in or on the Coriolis tube 2.

The channel loop of the Coriolis tube 2 is brought into resonance at actuation angle *θ*_{T}/*θ*_{S} through Lorentz force *F*_{L}, resulting from a magnetic field *B* and an AC current *i*. Figure 1b shows that a mass flow *ϕ*ₘ through the channel induces vibration in the detection mode through Coriolis force F_{Coriolis}. The ratio between the two vibration mode amplitudes is a measure for the flow.

Figure 2 shows a drawing after a SEM image of a sensor chip 17 comprising a micro-Coriolis mass flow sensor 1 according to the present disclosure. As shown in figures 2 and 3a - 3d, the one or more strain measurement devices 9 are arranged in or on one or more freely suspended portions 10 of the Coriolis tube 2 for locally measuring strain of the Coriolis tube 2. The one or more strain measurement devices 9 as shown comprise one or more strain gauges 11, for instance made of gold, platinum or another metal or silicon nitride. The one or more strain measurement devices 9 are arranged to locally coincide with an axial direction 12 of the Coriolis tube 2, although the one or more strain measurement devices 9 can also be placed at an angle with respect to the excitation axis, such as an angle of 45°. The "straight" and "angled" strain gauges 11 can be connected in series, such that Coriolis vibration can be measured, as well as actuation vibration. The combination of these measurements then leads to a ratio which provides information about the mass flow.

The strain gauges 11 reside on two freely suspended sections 10 sections of channel close to the fixed inlets/outlets 3, 4 at a distance from the tube fixation means 5. The strain gauges 11 may have an axial length of for instance 200 - 1000 µm, such as 200 - 400 µm. The width of the strain gauges 11 may advantageously amount to for instance 2 - 20 µm, such as 4 - 5 µm. In the exemplary embodiment as shown in figure 2 though, the strain gauge 11 has a width of 72 µm.

In rest, in the Coriolis tube 2 is arranged in a tube plane 13 and has a mirror plane 14 (figure 2), perpendicular to the tube plane 13 (figure 1c). The fixed inlet 3 and outlet 4 are symmetrically arranged with respect to the mirror plane 14. A pair of strain measurement devices 9 is symmetrically arranged with respect to the mirror plane 14.

The Coriolis tube 2 has a rectangular or square loop shape, with perpendicular tube portions 15 extending perpendicular to the mirror plane 14. The pair of strain measurement devices 9 can be arranged in or on the perpendicular tube portions 15, i.e. at opposite sides of the mirror plane 14.

The Coriolis tube 2 also has parallel tube portions 16 extending parallel to the mirror plane 14, wherein the pair of strain measurement devices 9 can be arranged in or on the parallel tube portions 16, again symmetrically arranged on opposite sides of the mirror plane 14. Therein, as stated before, in some situations it is conceivable to arrange the one or more strain measurement devices 9 close or adjacent to the tube fixation means 5, for instance near the fixed inlet 3 and fixed outlet 4, due to the strain being the largest there.

The fabrication process of the sensor chip 17 can for instance be based on the surface channel technology proposed in J. Groenesteijn et al., "A versatile technology platform for microfluidic handling systems, part I: fabrication and functionalization", Microfluidics and Nanofluidics 2017, Volume 21, Issue 7.

Figures 3a - 3d further elucidate the principle of operation of the resistive readout, wherein figure 3a shows the configuration of the strain gauges 11 in rest, figure 3b shows the configuration of the strain gauges 11 in the twist mode, wherein one strain gauge 11 is elongated, and the other is compressed. This results in opposite change in resistance. Figure 3c shows the strain gauges 11 in the swing mode, wherein both strain gauges are elongated due to torsion of the channel or tube 2. This results in equal resistance change. Figure 3d shows a combination of the two modes, which gives two resistance signals *R*₁, *R*₂ with a phase shift dependent on the mass flow rate.

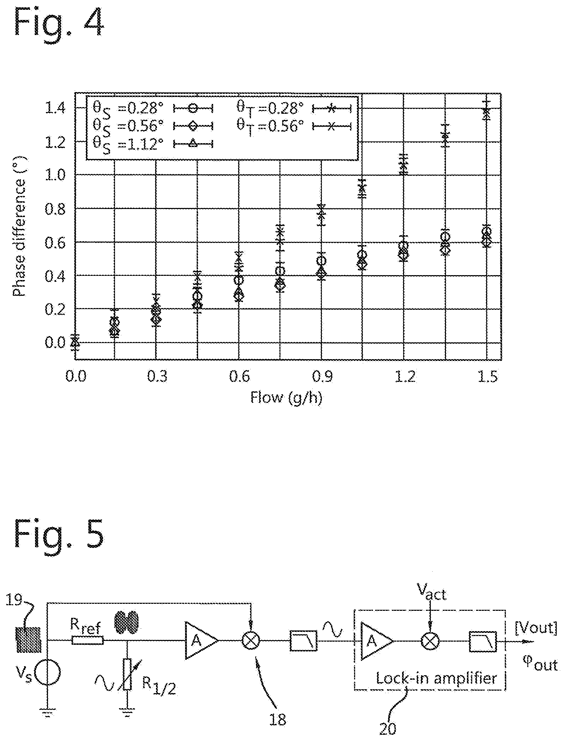

Figure 4 shows the output of the resistive readout in relation to the applied flow, for both excitation modes and at different excitation amplitudes. The error bars represent the standard deviation.

Figure 5 shows a schematic representation of the electronic readout circuit 18. The resistance *R*_{1/2} of one strain gauge 11 is converted to a voltage via a 1 MHz carrier signal 19 and a reference resistor *R*_{ref}. The 1 MHz carrier signal 19 is used to eliminate crosstalk from the actuation current. The carrier signal 19 is mixed out after which a lock-in amplifier 20 determines the magnitude and phase of the signal. Each strain gauge 11 is read out with a circuit such as depicted in figure 5. The phase difference between the two resulting signals *R*₁, *R*₂ is a measure for the flow.

### Experimental results

Multiple flow measurements have been carried out while actuating the sensor 1 and sensor chip 17 at various actuation angles *θ*_{T}/*θ*_{S} in the swing/twist mode respectively.

Nitrogen gas was fed through the sensor chip 17 at an input pressure of 7 bar. The mass flow rate was controlled by a mass flow controller at the outlet of the sensor chip 17.

Figure 4 shows the resulting phase difference output of the resistive readout. There is an approximately linear relation between the output and mass flow. The sensitivity is approximately 0.5° /(g h⁻¹) when actuating in the swing mode and approximately 0.9° /(g h⁻¹) when actuating in the twist mode.

The results show that the resistive readout is more sensitive when actuating in the twist mode. This is to be expected, since the strain gauges were designed to be most sensitive to swing mode deformation, which is in this case the Coriolis mode. However, in the swing mode, better accuracy is obtained. This could be due to lower dependency on external vibrations. The readout shows great potential to become a better alternative to the prior art capacitive readout especially when one or more of the following improvements are implemented:
1) Optimizing the design to increase sensitivity to a specific mode,
2) Adding on-chip reference resistors to reduce drift, and/or
3) Adding additional strain gauges 11 on the tube 2 to allow for a full Wheatstone bridge readout.

It should be clear that the description above is intended to illustrate the operation of preferred embodiments of the invention, and not to reduce the scope of protection of the invention.

### LIST OF REFERENCE NUMERALS

1. Micro-Coriolis mass flow sensor
2. Coriolis tube
3. Fixed inlet
4. Fixed outlet
5. Tube fixation means
6. Excitation axis (twist mode)
7. Excitation axis (swing mode)
8. Detection means
9. Strain measurement device
10. Freely suspended portion
11. Strain gauge
12. Axial direction of Coriolis tube
13. Tube plane
14. Mirror plane
15. Perpendicular tube portion
16. Parallel tube portion
17. Sensor chip
18. Electronic readout circuit
19. Carrier signal
20. Lock-in amplifier

## Claims

1. Micro-Electro-Mechanical Systems (MEMS) Coriolis mass flow sensor (1), comprising a Coriolis tube (2) having a fixed inlet (3) and a fixed outlet (4), being fixed in tube fixation means (5), excitation means for oscillating the Coriolis tube about an excitation axis (6, 7), detection means (8) for detecting, in use, at least a measure for movements of part of the Coriolis tube, the Coriolis tube (2) having a substantially rectangular or square loop shape, **characterized by** the detection means (8) comprising one or more strain measurement devices (9) configured for resistive readout being arranged in or on the Coriolis tube, wherein a strain measurement device (9) is located on a straight portion of the substantially rectangular or square loop shape of the Coriolis tube (2).

2. MEMS-Coriolis mass flow sensor (1) according to claim 1, wherein the one or more strain measurement devices (9) are arranged in or on one or more freely suspended portions (10) of the Coriolis tube (2) for locally measuring strain of the Coriolis tube.

3. MEMS-Coriolis mass flow sensor (1) according to claim 1 or 2, wherein the one or more strain measurement devices (9) comprise one or more strain gauges (11).

4. MEMS-Coriolis mass flow sensor (1) according to claim 3, wherein the one or more strain gauges (11) have a length of 200 - 1000 µm, such as 200 - 400 µm.

5. MEMS-Coriolis mass flow sensor (1) according to claim 3 or 4, wherein a width of the one or more strain gauges (11) amounts to 2 - 20 µm, such as 4 - 5 µm.

6. MEMS-Coriolis mass flow sensor (1) according to any one of the preceding claims, wherein the one or more strain measurement devices (9) are arranged to locally coincide with an axial direction (12) of the Coriolis tube (2).

7. MEMS-Coriolis mass flow sensor (1) according to any one of the preceding claims, wherein the one or more strain measurement devices (9) are arranged at an angle of 30 - 60°, for instance 40 - 50°, such as 45° with respect to the excitation axis (6, 7).

8. MEMS-Coriolis mass flow sensor (1) according to any one of the preceding claims, wherein the one or more strain measurement devices (9) are arranged at a distance from the tube fixation means (5).

9. MEMS-Coriolis mass flow sensor (1) according to any one of the preceding claims 1 - 7, wherein the one or more strain measurement devices (9) are arranged adjacent to the tube fixation means (5).

10. MEMS-Coriolis mass flow sensor (1) according to any one of the preceding claims, wherein, in rest, in the Coriolis tube (2) is arranged in a tube plane (13) and has a mirror plane (14), perpendicular to the tube plane, with the fixed inlet (3) and outlet (4) being symmetrically arranged with respect to the mirror plane, wherein a pair of strain measurement devices (9) is symmetrically arranged with respect to the mirror plane.

11. MEMS-Coriolis mass flow sensor (1) according to claim 10, wherein the rectangular or square loop shape of the Coriolis tube (2) has perpendicular tube portions (15) extending perpendicular to the mirror plane (14), wherein the pair of strain measurement devices (9) is arranged in or on the perpendicular tube portions.

12. MEMS-Coriolis mass flow sensor (1) according to claim 10 or 11, wherein the rectangular or square loop shape of the Coriolis tube (2) has parallel tube portions (16) extending parallel to the mirror plane (14), wherein the pair of strain measurement devices (9) is arranged in or on the parallel tube portions.

13. MEMS-Coriolis mass flow sensor (1) according to any one of the preceding claims, wherein the one or more strain measurement devices (9) are linear strain measurement devices.

## Patentansprüche

1. Coriolis-Massendurchflusssensor (1) für mikroelektromechanische Systeme (MEMS), umfassend ein Coriolis-Rohr (2) mit einem festen Einlass (3) und einem festen Auslass (4), die in einer Rohrfixierungseinrichtung (5) fixiert sind, eine Erregungseinrichtung zum Oszillieren des Coriolis-Rohrs um eine Erregungsachse (6, 7), eine Erfassungseinrichtung (8) zum Erfassen mindestens eines Messwerts für Bewegungen eines Teils des Coriolis-Rohrs während der Verwendung, wobei das Coriolis-Rohr (2) eine im Wesentlichen rechteckige oder quadratische Schleifenform aufweist, **dadurch gekennzeichnet, dass**
die Erfassungseinrichtung (8) eine oder mehrere Dehnungsmessvorrichtungen (9) umfasst, die für eine Widerstandsangabe ausgelegt ist/sind, die in oder an dem Coriolis-Rohr angeordnet ist/sind, wobei sich eine Dehnungsmessvorrichtung (9) auf einem geraden Abschnitt der im Wesentlichen rechteckigen oder quadratischen Schleifenform des Coriolis-Rohrs (2) befindet.

2. MEMS-Coriolis-Massendurchflusssensor (1) nach Anspruch 1, wobei die eine oder mehreren Dehnungsmessvorrichtungen (9) in oder an einem oder mehreren frei hängenden Abschnitten (10) des Coriolis-Rohrs (2) angeordnet sind, um die Dehnung des Coriolis-Rohrs lokal zu messen.

3. MEMS-Coriolis-Massendurchflusssensor (1) nach Anspruch 1 oder 2, wobei die eine oder mehreren Dehnungsmessvorrichtungen (9) einen oder mehrere Dehnungsmesser (11) umfassen.

4. MEMS-Coriolis-Massendurchflusssensor (1) nach Anspruch 3, wobei der eine oder die mehreren Dehnungsmesser (11) eine Länge von 200-1000 µm, zum Beispiel 200-400 µm aufweisen.

5. MEMS-Coriolis-Massendurchflusssensor (1) nach Anspruch 3 oder 4, wobei die Breite des einen oder der mehreren Dehnungsmesser (11) 2-20 µm, zum Beispiel 4-5 µm beträgt.

6. MEMS-Coriolis-Massendurchflusssensor (1) nach einem der vorstehenden Ansprüche, wobei die eine oder mehreren Dehnungsmessvorrichtungen (9) dazu angeordnet sind, mit einer Axialrichtung (12) des Coriolis-Rohrs (2) lokal zusammenzufallen.

7. MEMS-Coriolis-Massendurchflusssensor (1) nach einem der vorstehenden Ansprüche, wobei die eine oder mehreren Dehnungsmessvorrichtungen (9) in einem Winkel von 30-60°, zum Beispiel 40-50°, zum Beispiel 45°, in Bezug zur Erregungsachse (6, 7) angeordnet sind.

8. MEMS-Coriolis-Massendurchflusssensor (1) nach einem der vorstehenden Ansprüche, wobei die eine oder mehreren Dehnungsmessvorrichtungen (9) von der Rohrfixierungseinrichtung (5) beabstandet angeordnet sind.

9. MEMS-Coriolis-Massendurchflusssensor (1) nach einem der vorstehenden Ansprüche 1-7, wobei die eine oder mehreren Dehnungsmessvorrichtungen (9) an die Rohrfixierungseinrichtung (5) angrenzend angeordnet sind.

10. MEMS-Coriolis-Massendurchflusssensor (1) nach einem der vorstehenden Ansprüche, wobei das Coriolis-Rohr (2) in Ruhe in einer Rohrebene (13) angeordnet ist und eine Spiegelebene (14) aufweist, die senkrecht zur Rohrebene ist, wobei der feste Einlass (3) und Auslass (4) in Bezug zur Spiegelebene symmetrisch angeordnet sind, wobei ein Paar Dehnungsmessvorrichtungen (9) in Bezug zur Spiegelebene symmetrisch angeordnet ist.

11. MEMS-Coriolis-Massendurchflusssensor (1) nach Anspruch 10, wobei die rechteckige oder quadratische Schleifenform des Coriolis-Rohrs (2) senkrechte Rohrabschnitte (15) aufweist, die sich senkrecht zur Spiegelebene (14) erstrecken, wobei das Paar Dehnungsmessvorrichtungen (9) in oder an den senkrechten Rohrabschnitten angeordnet ist.

12. MEMS-Coriolis-Massendurchflusssensor (1) nach Anspruch 10 oder 11, wobei die rechteckige oder quadratische Schleifenform des Coriolis-Rohrs (2) parallele Rohrabschnitte (16) aufweist, die sich parallel zur Spiegelebene (14) erstrecken, wobei das Paar Dehnungsmessvorrichtungen (9) in oder an den parallelen Rohrabschnitten angeordnet ist.

13. MEMS-Coriolis-Massendurchflusssensor (1) nach einem der vorstehenden Ansprüche, wobei die eine oder mehreren Dehnungsmessvorrichtungen (9) lineare Dehnungsmessvorrichtungen sind.

## Revendications

1. Capteur de débit massique à effet Coriolis de type MEMS (systèmes microélectromécaniques) (1), comprenant un tube de Coriolis (2) présentant une entrée fixe (3) et une sortie fixe (4), qui est fixé dans des moyens de fixation de tube (5), des moyens d'excitation pour faire osciller le tube de Coriolis autour d'un axe d'excitation (6, 7), des moyens de détection (8) pour détecter, en cours d'utilisation, au moins une mesure des mouvements d'une partie du tube de Coriolis, le tube de Coriolis (2) présentant une forme de boucle sensiblement rectangulaire ou carrée,
**caractérisé en ce que** les moyens de détection (8) comprennent un ou plusieurs dispositifs de mesure de contrainte (9) configurés pour une lecture résistive, qui sont agencés dans ou sur le tube de Coriolis, dans lequel un dispositif de mesure de contrainte (9) est situé sur une partie droite de la forme de boucle sensiblement rectangulaire ou carrée du tube de Coriolis (2).

2. Capteur de débit massique à effet Coriolis de type MEMS (1) selon la revendication 1, dans lequel le ou les plusieurs dispositifs de mesure de contrainte (9) sont agencés dans ou sur une ou plusieurs parties librement suspendues (10) du tube de Coriolis (2) pour mesurer localement une contrainte du tube de Coriolis.

3. Capteur de débit massique à effet Coriolis de type MEMS (1) selon la revendication 1 ou 2, dans lequel le ou les plusieurs dispositifs de mesure de contrainte (9) comprennent une ou plusieurs jauges de contrainte (11).

4. Capteur de débit massique à effet Coriolis de type MEMS (1) selon la revendication 3, dans lequel la ou les plusieurs jauges de contrainte (11) ont une longueur de 200 à 1000 µm, par exemple de 200 à 400 µm.

5. Capteur de débit massique à effet Coriolis de type MEMS (1) selon la revendication 3 ou 4, dans lequel une largeur de la ou des plusieurs jauges de contrainte (11) est comprise entre 2 et 20 µm, par exemple entre 4 et 5 µm.

6. Capteur de débit massique à effet Coriolis de type MEMS (1) selon l'une quelconque des revendications précédentes, dans lequel le ou les plusieurs dispositifs de mesure de contrainte (9) sont agencés de manière à coïncider localement avec une direction axiale (12) du tube de Coriolis (2).

7. Capteur de débit massique à effet Coriolis de type MEMS (1) selon l'une quelconque des revendications précédentes, dans lequel le ou les plusieurs dispositifs de mesure de contrainte (9) sont agencés à un angle de 30 à 60°, par exemple de 40 à 50°, tel que 45°, par rapport à l'axe d'excitation (6, 7).

8. Capteur de débit massique à effet Coriolis de type MEMS (1) selon l'une quelconque des revendications précédentes, dans lequel le ou les plusieurs dispositifs de mesure de contrainte (9) sont agencés à une certaine distance des moyens de fixation de tube (5).

9. Capteur de débit massique à effet Coriolis de type MEMS (1) selon l'une quelconque des revendications précédentes 1 à 7, dans lequel le ou les plusieurs dispositifs de mesure de contrainte (9) sont agencés de manière adjacente aux moyens de fixation de tube (5).

10. Capteur de débit massique à effet Coriolis de type MEMS (1) selon l'une quelconque des revendications précédentes, dans lequel, au repos, le tube de Coriolis (2) est agencé dans un plan de tube (13) et présente un plan miroir (14), perpendiculaire au plan de tube, l'entrée (3) et la sortie (4) fixes étant agencées symétriquement par rapport au plan miroir, dans lequel une paire de dispositifs de mesure de contrainte (9) est agencée symétriquement par rapport au plan miroir.

11. Capteur de débit massique à effet Coriolis de type MEMS (1) selon la revendication 10, dans lequel la forme de boucle rectangulaire ou carrée du tube de Coriolis (2) présente des parties de tube perpendiculaires (15) s'étendant perpendiculairement au plan miroir (14), dans lequel la paire de dispositifs de mesure de contrainte (9) est agencée dans ou sur les parties de tube perpendiculaires.

12. Capteur de débit massique à effet Coriolis de type MEMS (1) selon la revendication 10 ou 11, dans lequel la forme de boucle rectangulaire ou carrée du tube de Coriolis (2) présente des parties de tube parallèles (16) s'étendant parallèlement au plan miroir (14), dans lequel la paire de dispositifs de mesure de contrainte (9) est agencée dans ou sur les parties de tube parallèles.

13. Capteur de débit massique à effet Coriolis de type MEMS (1) selon l'une quelconque des revendications précédentes, dans lequel le ou les plusieurs dispositifs de mesure de contrainte (9) sont des dispositifs de mesure de contrainte linéaire.
